# EUROPEAN PATENT APPLICATION

(11) **EP 2 129 092 A1**
(43) Date of publication of application: **02.12.2009**
(21) Application number: 08711533.3
(22) Date of filing: 19.02.2008
(51) Int. Cl.: H04M 3/42, G06Q 10/00, G06Q 30/00

(54) **CLIENT INTRODUCTION SUPPORT SYSTEM AND CLIENT INTRODUCTION SUPPORT METHOD**

(30) Priority: 22.02.2007 JP 2007042880
(71) Applicant: NEC Corporation, Minato-ku Tokyo 108-8001 (JP)
(72) Inventor: MINAMIZAWA, Takeaki, Tokyo 108-8001 (JP); TSUTAZAWA, Natsuko, Tokyo 108-8001 (JP)
(74) Representative: Betten & Resch
(86) International application number: PCT/JP2008/052709
(87) International publication number: WO 2008/102750

(57) **Abstract**

It is required to make a subscriber terminal acquire guide information from many service enterprisers at appropriate timing while preventing leakage of private information such as a mail address capable of identifying an individual. By use of a center unit managing a customer based on a provisional ID and a customer introduction count, terminals of service enterprisers introduce customers by transferring provisional IDs therebetween according to the provisional ID, the customer introduction count, and the like issued from the center unit.

## Description

### TECHNICAL FIELD

The present invention relates to a technique to support customer introduction based on a provisional ID and a customer introduction condition.

### RELATED ART

Recently, mobile telephones and smart phones each of which includes a contactless IC card have been broadly used and are available for the accounting and the information collection in real shops and mail-order sales sites on the Internet. In this situation, if the mobile telephone can receive guide information of a karaoke box, bowling alleys, and the like for a second party, at timing when the bill is paid in a bar, the service enterpriser can increase chances to take customers to the shops.

As above, it is a remarkable benefit for the subscribers if many service enterprisers deliver shop guide information to the mobile telephone at appropriate timing; on the other hand, unless leakage of private information items is prevented, such as a mail address and a telephone number which can be used to identify the individual, this does not become a valuable service due to prank mail and the like.

As a related art, there has been a system of a technique described in Patent Document 1 in which a telephone unit requests a center unit to issue a provisional ID, the center unit establishes a correspondence between a telephone number of the telephone unit and a temporarily issued provisional ID, and transfers the provisional ID to one other subscriber; as a result, the telephone unit can receive a call from the peer by preventing leakage of the private information.

Also, at a request of the issuance of a provisional ID in this system, a telephone number of the peer to be granted for use of the provisional ID is registered to the center unit to thereby restrict the utilization of the provisional ID.
Patent Document 1: Japanese Patent Laid-Open Pub. No. 2002-261935

### DISCLOSURE OF THE INVENTION

### PROBLEM TO BE SOLVED BY THE INVENTION

However, in the method of the related art, it is required to beforehand register the telephone number of the peer, which is granted to use the provisional ID, to the center unit, and it is hence difficult to adapt the method to a service in which provisional ID is transferred among many service enterprisers to introduce the customer to each other.

The present invention has been devised to solve the problem described above. Its object is to provide a customer introduction support system and a customer introduction support method in which guide information can be acquired from many service enterprisers at appropriate timing while preventing leakage of private information such as a mail address which can be used to identify the individual.

### MEANS FOR SOLVING THE PROBLEM

To achieve the above object, the present invention has the following aspects.

The present invention provides a customer introduction support system for mutually introducing customers by transferring provisional. IDs issued from a center apparatus between service enterprisers, wherein
the center apparatus includes
provisional ID issuing means for issuing a provisional ID related to a subscriber address whose reacheability to a subscriber terminal is guaranteed and a customer introduction count and
guide information transmission judgment means for judging, at reception of a request for message transmission to a subscriber terminal by a provisional ID from a service enterpriser, that the guide information message is transmitted to the subscriber terminal if the number of service enterprisers having transmitted a guide information message to a subscriber terminal is less than the customer introduction count and the guide information message is not transmitted if the number is equal to or more than the customer introduction count, and
a terminal of the service enterpriser includes
guide information transmission request means for requesting transmission of a guide information message to a subscriber terminal by designating a provisional ID and
customer introduction transmission means for introducing a customer by transferring a provisional ID issued from the center apparatus to other service enterpriser within the customer introduction count.

Further, the present invention provides a customer introduction support system for mutually introducing customers by transferring provisional IDs issued from a center apparatus between service enterpriser, wherein:
the center apparatus includes
provisional ID issuing means for issuing a provisional ID related to a subscriber address whose reacheability to a subscriber terminal is guaranteed and customer introduction distance prescribing distance in which customers can be mutually introduced between service enterprisers and
guide information transmission judgment means for judging, at reception of a request for message transmission of guide information to a subscriber terminal by a provisional ID from a service enterpriser, that the guide information message is transmitted to the subscriber terminal if distance between the stores of the service enterprisers is less than the customer introduction distance and the guide information message is not transmitted if the distance is equal to or more than the customer introduction distance, and
a terminal of the service enterpriser includes
guide information transmission request means for requesting transmission of a guide information message to a subscriber terminal by designating a provisional ID and
customer introduction transmission means for introducing a customer by transferring a provisional ID issued from the center apparatus to a shop or other service enterpriser within the customer introduction distance.

Moreover, the present invention provides a customer introduction support system for mutually introducing customers by transferring provisional IDs issued from a center apparatus between service enterprisers, wherein
the center apparatus includes
provisional ID issuing means for issuing a provisional ID related to a subscriber address whose reacheability to a subscriber terminal is guaranteed, a customer introduction count, and customer introduction distance prescribing distance in which customers can be mutually introduced between service enterprisers and
guide information transmission judgment means for judging, at reception of a request for message transmission of guide information to a subscriber terminal by a provisional ID from a service enterpriser, that the guide information message is transmitted to the subscriber terminal if the number of service enterprisers having transmitted a guide information message to a subscriber terminal is less than the customer introduction count and distance between the stores of the service enterprisers is less than the customer introduction distance and the guide information message is not transmitted in the other cases, and
a terminal of the service enterpriser includes
guide information transmission request means for requesting transmission of a guide information message to a subscriber terminal by designating a provisional ID and
customer introduction transmission means for introducing a customer by transferring a provisional ID issued from the center apparatus to a shop of one other service enterpriser within the customer introduction count and within the customer introduction distance.

Additionally, the present invention provides a customer introduction support method of mutually introducing customers by transferring provisional IDs issued from a center apparatus between service enterprisers, wherein
the center apparatus includes
a provisional ID issuing step of issuing a provisional ID related to a subscriber address whose reacheability to a subscriber terminal is guaranteed and a customer introduction count and
a guide information transmission judgment step of judging, at reception of a request for message transmission to a subscriber terminal by a provisional LID from a service enterpriser, that the guide information message is transmitted to the subscriber terminal if the number of service enterprisers having transmitted a guide information message to a subscriber terminal is less than the customer introduction count and the guide information message is not transmitted if the number is equal to or more than the customer introduction count, and
a terminal of the service enterpriser includes
a guide information transmission request step of requesting transmission of a guide information message to a subscriber terminal by designating a provisional ID and
a customer introduction transmission step of introducing a customer by transferring a provisional ID issued from the center apparatus to other service enterpriser within the customer introduction count.

Also, the present invention provides a customer introduction support method of mutually introducing customers by transferring provisional IDs issued from a center apparatus between service enterprisers, wherein:
the center apparatus includes
a provisional ID issuing step of issuing a provisional ID related to a subscriber address whose reacheability to a subscriber terminal is guaranteed and customer introduction distance prescribing distance in which customers can be mutually introduced between service enterpriser and
a guide information transmission judgment step of judging, at reception of a request for message transmission of guide information to a subscriber terminal by a provisional ID from a service enterpriser, that the guide information message is transmitted to the subscriber terminal if distance between the stores of the service enterprisers is less than the customer introduction distance and the guide information message is not transmitted if the distance is equal to or more than the customer introduction distance, and
a terminal of the service enterpriser includes
a guide information transmission request step of requesting transmission of a guide information message to a subscriber terminal by designating a provisional ID and
a customer introduction transmission step of introducing a customer by transferring a provisional ID issued from the center apparatus to a shop of other service enterpriser within the customer introduction distance.

In addition, the present invention provides a customer introduction support method of mutually introducing customers by transferring provisional IDs issued from a center apparatus between service enterprisers, wherein:
the center apparatus includes
a provisional ID issuing step of issuing a provisional ID related to a subscriber address whose reacheability to a subscriber terminal is guaranteed, a customer introduction count, and customer introduction distance prescribing distance in which customers can be mutually introduced between service enterprisers and
a guide information transmission judgment step of judging, at reception of a request for message transmission of guide information to a subscriber terminal by a provisional ID from a service enterpriser, that the guide information message is transmitted to the subscriber terminal if the number of service enterprisers having transmitted a guide information message to a subscriber terminal is less than the customer introduction count and distance between the stores of the service enterprisers is less than the customer introduction distance and the guide information message is not transmitted in the other cases, and
a terminal of the service enterpriser includes
a guide information transmission request step of requesting transmission of a guide information message to a subscriber terminal by designating a provisional ID and
a customer introduction transmission step of introducing a customer by transferring a provisional ID issued from the center apparatus to a shop of other service enterpriser within the customer introduction count and within the customer introduction distance.

### ADVANTAGES OF THE INVENTION

In accordance with the present invention, guide information can be acquired from many service enterprisers at appropriate timing while preventing leakage of private information such as a mail address capable of identifying the individual.

### BEST MODE FOR CARRYING OUT THE INVENTION

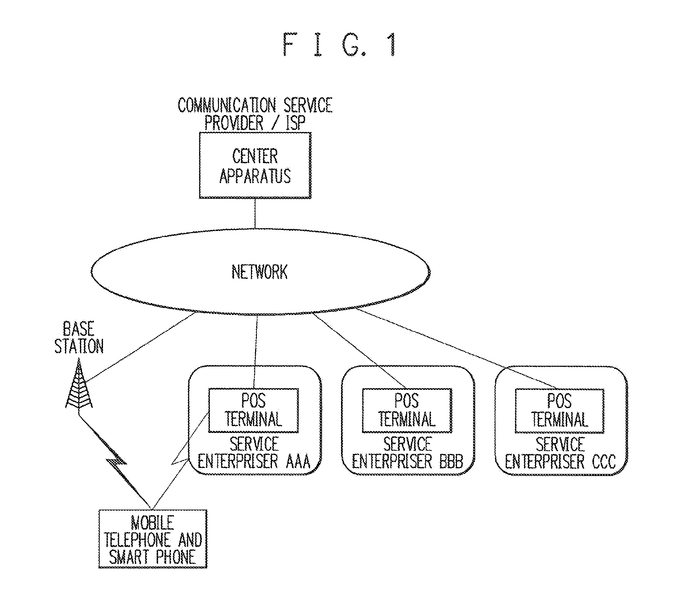

Next, description will be given in detail of a first exemplary embodiment of the present invention by referring to drawings. FIG. 1 shows a system configuration to implement a customer introduction support system in the present embodiment.

A subscriber terminal communicates via a base station with a center unit on a network by use of a radio communication method such as 3G and communicates with terminals (such as a POS terminal, an entrance/exit gate, and a wicket of a station) of service enterprisers using a contactless IC card communication method, an infrared communication method, and the like. As the subscriber terminal of this embodiment, there is considered a mobile telephone including a contactless IC, a smart phone including a contactless IC, or the like.

The center apparatus provides a mail service and a call service to the subscriber terminals and returns, at reception of a request for issuance of a provisional ID from a subscriber terminal, a provisional ID to the subscriber terminal. Additionally, if the center apparatus includes a function in which at reception of a request for transmission of guide information from a service enterpriser, the apparatus sends guide information thereto if a transmission condition is satisfied. The center apparatus is operated by communication providers and ISP (internee Service provider).

A POS terminal is a register or the like installed in a store of a service enterpriser such as a bar or a karaoke lounge and acquires, at payment of a bill by use of a subscriber terminal, a provisional ID and a customer introduction condition from the subscriber terminal. Further, the POS terminal includes a function to introduce the customer currently in the shop to a second service enterpriser by transmitting the provisional ID and the customer introduction condition.

The base station is a device for the subscriber terminal to connect to the network.

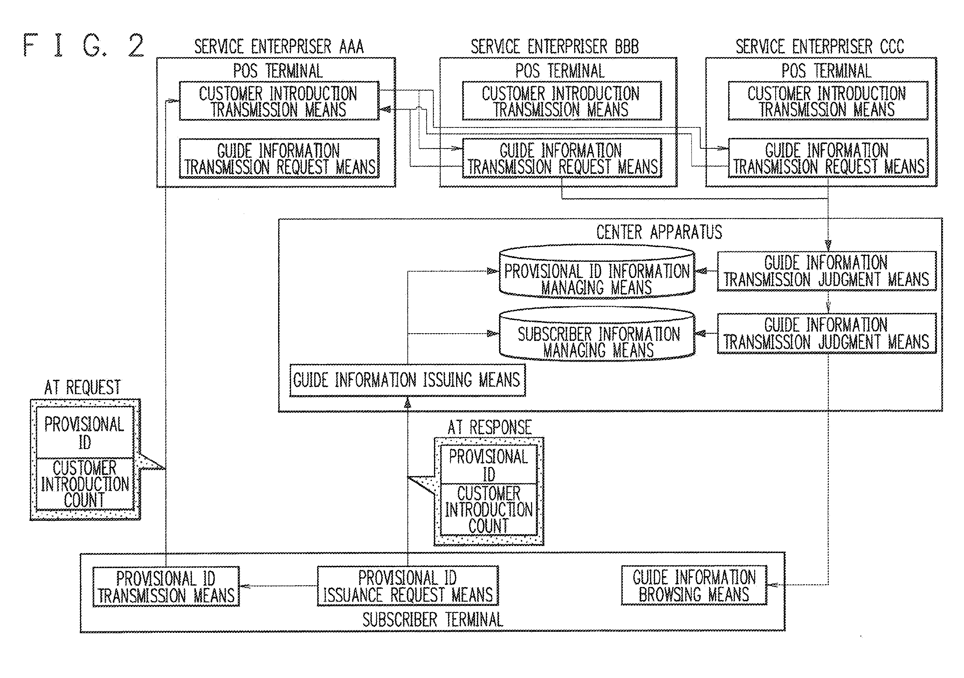

FIG. 2 shows a functional block diagram of the subscriber terminal, the center unit, and the POS terminal.

The subscriber terminal includes: provisional ID issuance request means to request, by use of a radio communication function such as 3G, the center unit to issue a provisional ID to acquire a provisional ID and a customer introduction condition: provisional ID transmission means to send the acquired provisional ID and the acquired customer introduction condition to the service enterpriser by use of a contactless IC card and an infrared communication; and guide information browsing means to display guide information notified from the center unit.

The center unit includes provisional ID issuing means which receives a provisional ID issuance request from a subscriber terminal to create a provisional ID and returns the provisional ID and a customer introduction condition to the subscriber terminal; guide information transmission judgment means which receives a guide information transmission request from a service enterpriser to judge whether or not a transmission condition of guide information is satisfied; guide information transmission means to send guide information to the subscriber terminal, if the guide information transmission judgment means judges that the transmission condition is satisfied; subscriber information managing means to manage a subscriber information management table to store private information of subscribers; and provisional ID information managing means to manage a provisional ID information management table to store the provisional ID created by the provisional ID issuing means.

The POS terminal includes: customer introduction transmission means which introduces a customer by sending a provisional ID to a POS terminal of one other service enterpriser based on a customer introduction condition received from a subscriber terminal; a POTS terminal of one other service enterpriser, or the like; and guide information transmission request means which requests the center unit to transmit guide information, by use of the provisional ID received from the other service enterpriser.

Moreover, as for an arrow in the functional block diagram, the arrow whose edge is marked out indicates that communication terminates in bidirectional operation using a request and a reply. Further, the arrow whose edge is not marked out indicates that communication terminates in one-directional operation.

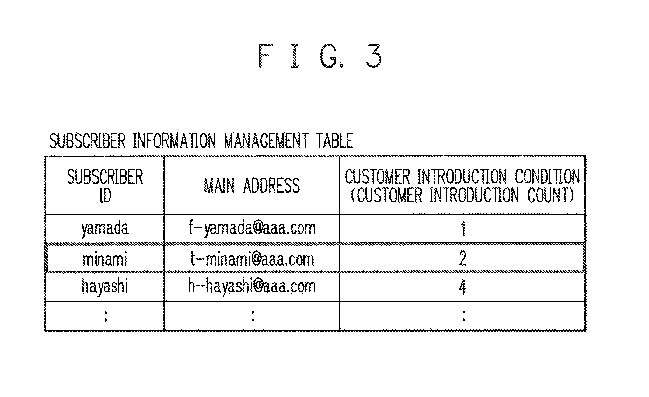

FIG. 3 shows a configuration of a subscriber information management table to manage private information of subscribers.

The subscriber information management table includes: a "subscriber ID" to uniquely identify a subscriber in the center unit; a "mail address" to realize reacheability to a subscriber terminal; and a "customer introduction count" to set an upper limit of the number of operations to introduce a subscriber to service enterprisers.

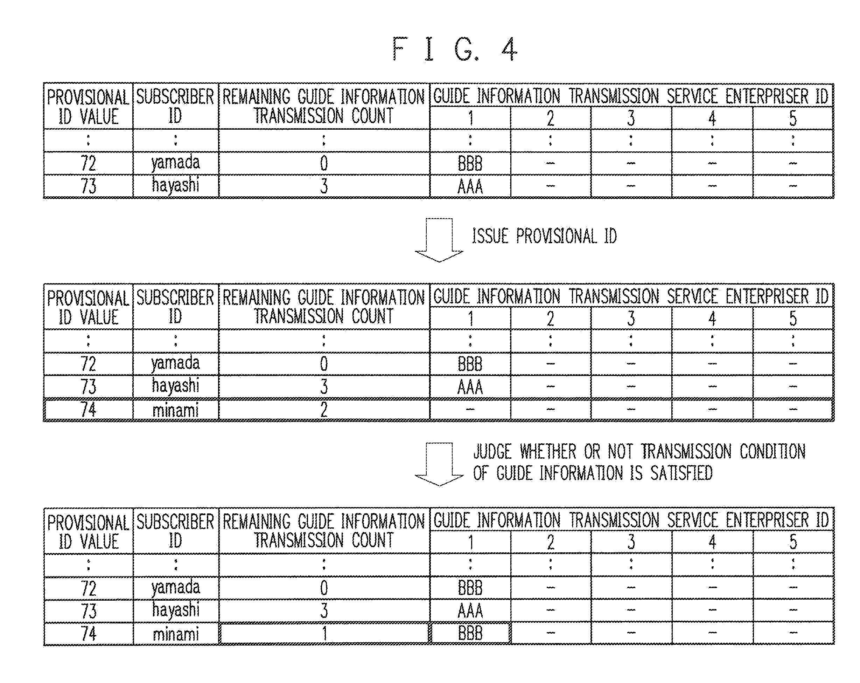

FIG. 4 shows structure of a provisional ID information management table.

The provisional ID information management table includes: a "provisional ID" which is a value of the issued provisional ID: a "subscriber ID" of a subscriber having requested the issuance of an provisional ID: a "remaining guide information transmission count" indicating the remaining number of operations to receive the transmission request of guide information by the same provisional ID; and a "guide information transmission service enterpriser ID" capable of storing a plurality of service enterpriser IDs to identify service enterprisers having transmitted guide information by the same provisional ID.

Next, operation of this embodiment will be described by use of the system configuration diagram of FIG. 1, the functional blocks of FIG. 2, the subscriber information management table of FIG. 3, the provisional ID information management table of FIG. 4, and the sequence of FIG. 5.

In the present embodiment, synchronized communication (from a subscriber terminal or a POS terminal) to the center apparatus is carried out by conducting subscriber or POS terminal authentication in the center apparatus. Hence, the center apparatus can attain a subscriber or service enterpriser ID in the synchronized communication.

(S1) The user who desires to use a subscriber terminal operates, as preparing operation to receive guide information from a service enterpriser, the subscriber terminal to request the center unit to issue a provisional ID. It is assumed in the present embodiment that a subscriber terminal including a subscriber ID of "minami" requests issuance of a provisional ID.

When the provisional ID issuance request is received from the subscriber terminal, the provisional ID issuing means of the center apparatus accesses the subscriber information managing means to obtain from the subscriber information management table a customer introduction condition (customer introduction count) corresponding to the subscriber ID. For the subscriber ID of "minami", the value of "2" is attained.

And the provisional ID issuing means accesses the provisional ID information managing means to add a new record to the provisional ID information management table. In the table, the "provisional ID" item stores a value to uniquely identify each record of the provisional ID information management table; here, an automatically assigned value of "74" is stored. In the table, the "subscriber ID" item stores "minami". The "remaining guide information transmission count" of the table stores a value of "2" acquired from the subscriber information managing means. In the table, "guide information transmission service enterpriser ID" field is blank.

(S2) The provisional ID issuing means returns the value "74" of the issued provisional ID and the value "2" of the customer introduction condition (customer introduction count) to the subscriber terminal.

(S3) And, at timing when the subscriber pays the bill in a bar or the like by use of a mobile telephone including a contactless IC card, the value "74" of the provisional ID and the value "2" of the customer introduction count are transferred to the provisional ID transmission means.

Also, the processing from (S1) to (S3) described above may be executed as a sequence of operation at timing when the subscriber pays the bill in a bar or the like by use of a mobile telephone including a contactless IC card.

(S4) The provisional ID transmission means delivers the value "74" of the provisional ID and the value "2" of the customer introduction condition (customer introduction count) to the shop (service enterpriser) being currently visited by the customer.

(S5) When the provisional ID and the customer introduction condition are received, the customer introduction transmission means of the service enterpriser transmits customer information to one other service enterpriser, e.g., one other shop of the same store chain. The customer information includes the accounting time in the store being currently visited, the number of customers in the group, ages, sexes, or the like. Also, as for the method of transmitting the customer information, it may be transmitted through the broadcasting operation to all stores of the store chain or it may be sent to an unspecified number of the general public by use of the P2P (Peer-To-Peer) protocol. P2P is a communication utilization mode in which an unspecified number of IT devices are mutually connected to directly communicate information therebetween.

The other store (service enterpriser BBB) having received the customer information judges whether or not the received customer information is sent as guide information to the subscriber terminal.

(S6) If it is judged that it is favorable to deliver the guide information to the subscriber terminal, the store issues a request for transmission of a provisional ID to the store (service enterpriser BBB) as the transmission source of the customer information.

(S7) When the request for transmission of a provisional ID is received, the store (service enterpriser AAA) returns a provisional ID if the transmission of the provisional ID to the other service enterpriser provider is associated with the transmission count less than the customer introduction count received from the subscriber terminal. Since the customer introduction count is a value of "2" in this situation, if the provisional ID has already been delivered to two service enterprisers, provisional ID return rejection is replied to the service enterpriser as the provisional ID transmission request source.

(S8) The store (service enterpriser BBB) having received the provisional ID requests, by use of the provisional ID, the center unit to transmit guide information to the subscriber terminal.

When the transmission request of guide information is received, the guide information transmission judgment means of the center apparatus accesses the provisional ID information managing means.

And it is confirmed that the service enterpriser ID having requested the guide information transmission has not been stored in the "guide information transmission service enterprise ID" of the provisional ID information management table corresponding to the provisional ID attained in (S8). If the ID has been stored, request rejection is returned to the service enterpriser as the guide information transmission request source.

Next, the "remaining guide information transmission count" is acquired from the provisional ID information management table. If the "remaining guide information transmission count" is "0", request rejection is returned to the service enterpriser as the guide information transmission request source.

(S9) In the other cases, it is judged that guide information can be transmitted, one is subtracted from the "remaining guide information transmission count" of the provisional ID information management table, the service enterpriser ID as the guide information transmission request source is added to the "guide information transmission service enterpriser ID" field, and successful acceptance of the request is returned to the service enterpriser as the guide information transmission request source.

(S10) And the guide information transmission judgment means notifies the value of the subscriber ID "minami" to which the guide information is to be transmitted, to the guide information transmission means.

(S11) The guide information transmission means having received the subscriber ID accesses subscriber information managing means to extract the value of the mail address "t-minami@aaa.com" corresponding to the value of the subscriber ID "minami" from subscriber information management table. And, the guide information transmission means delivers guide information to the mail address.

The guide information browsing means of the subscriber terminal having received the guide information displays the guide information.

The first advantage of the present embodiment resides in that the center apparatus conducts reacheability control from a service enterpriser to a subscriber terminal based on a customer introduction condition managed for each subscriber, i.e., a customer introduction count; hence, customer information can be communicated (customer introduction) directly between service enterprisers (stores) without passing the center apparatus, and the load imposed on the center apparatus is mitigated.

Further, the second advantage resides in that since the customer information can be communicated (customer introduction) directly between service enterprisers (stores) without passing the center apparatus, the communication of the customer information (customer introduction) between service enterprisers can be carried out using a protocol desired to be employed by the service enterprisers.

Additionally, the third advantage resides in that the center apparatus controls the same provisional ID as a parameter from a plurality of service enterprisers; hence, the same provisional ID can be used by a plurality of service enterprisers and this facilitates management of the provisional ID in the service enterprisers.

Next, description will be given of a second exemplary embodiment of the present invention. In conjunction with this embodiment, description will be given of a method in which a new condition "customer introduction distance" is employed as the customer introduction condition.

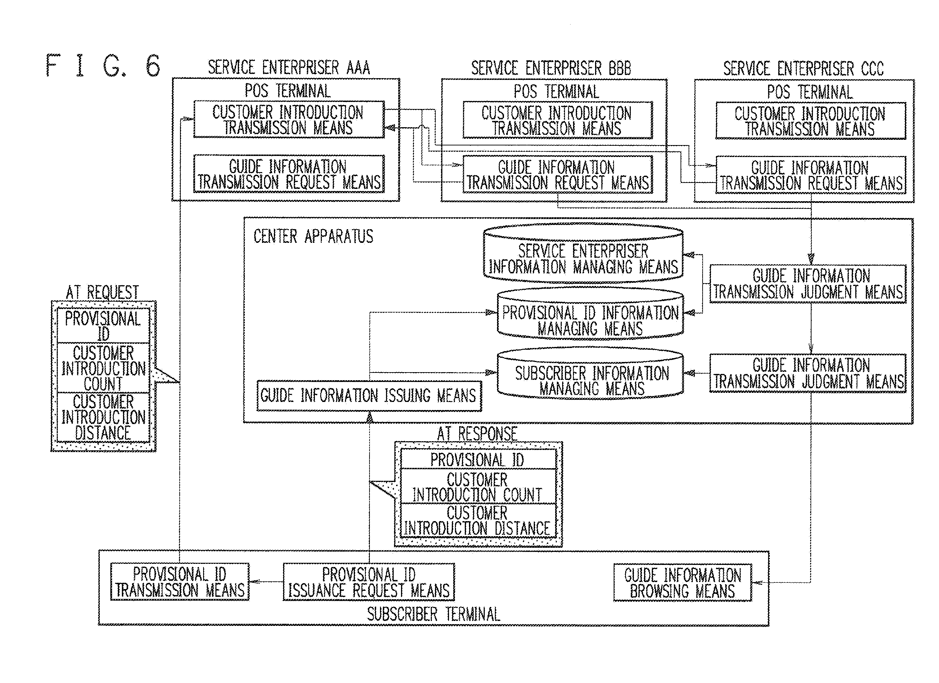

FIG. 6 shows functional blocks of the present embodiment. In the center unit of FIG. 6, service enterpriser information managing means is added to the functional blocks of the subscriber terminal of the first exemplary embodiment.

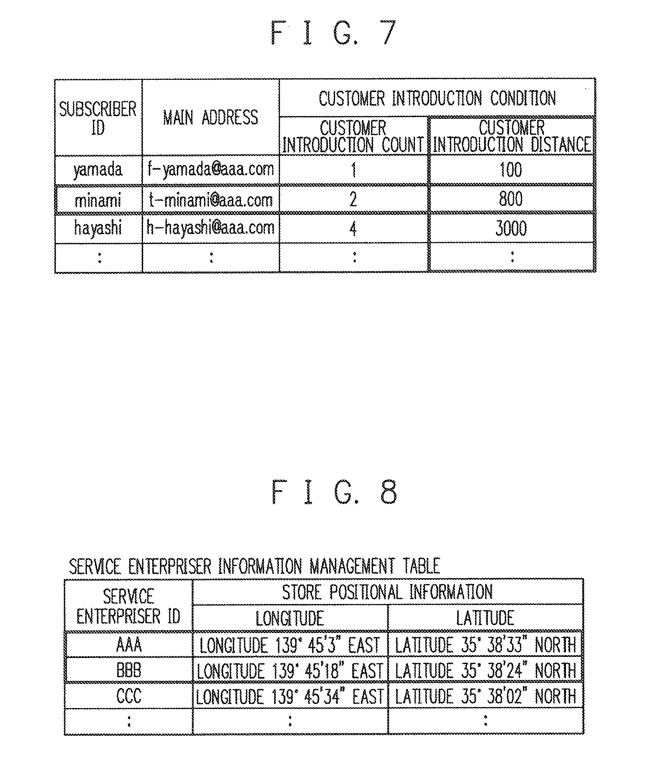

Moreover, FIG. 7 shows a subscriber information management table of the second exemplary embodiment. In the subscriber information management table of FIG. 7, a customer introduction distance item is added as a customer introduction condition to the subscriber information management table of the first exemplary embodiment.

FIG. 8 shows a new service enterpriser information management table added in the second exemplary embodiment. The service enterpriser information management table includes a "service enterpriser ID" item to identify a service enterpriser and a "store positional information" item indicating the latitude and the longitude of a position at which the store of the service enterpriser exists.

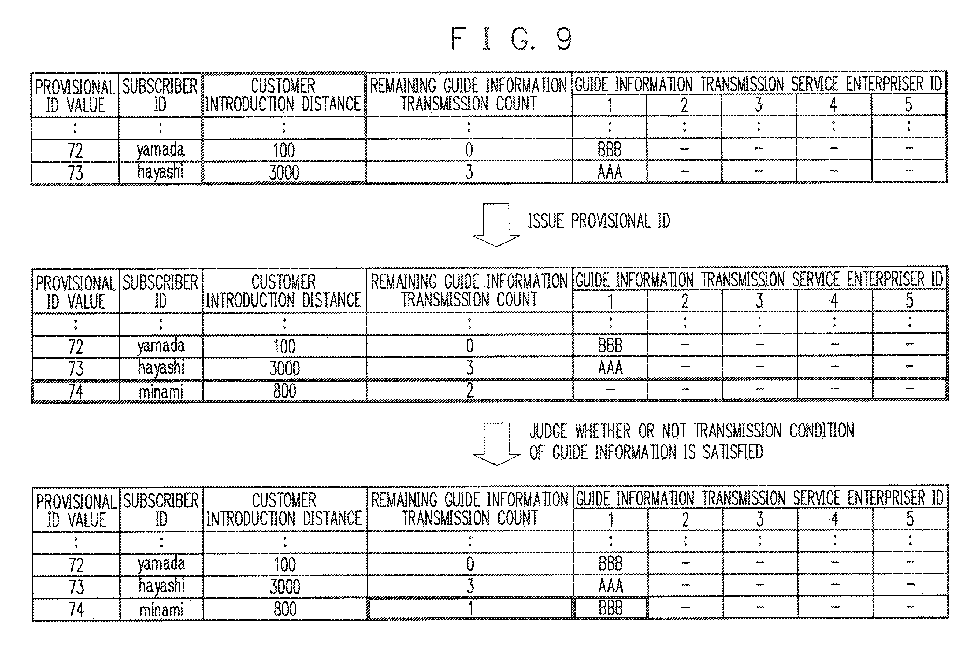

FIG. 9 shows a provisional ID information management table in the second exemplary embodiment. The management table of FIG. 9 is implemented by adding a "customer introduction distance" field to the provisional ID information management table of the first exemplary embodiment. In the present embodiment, a "customer introduction distance" is in units of meters (m).

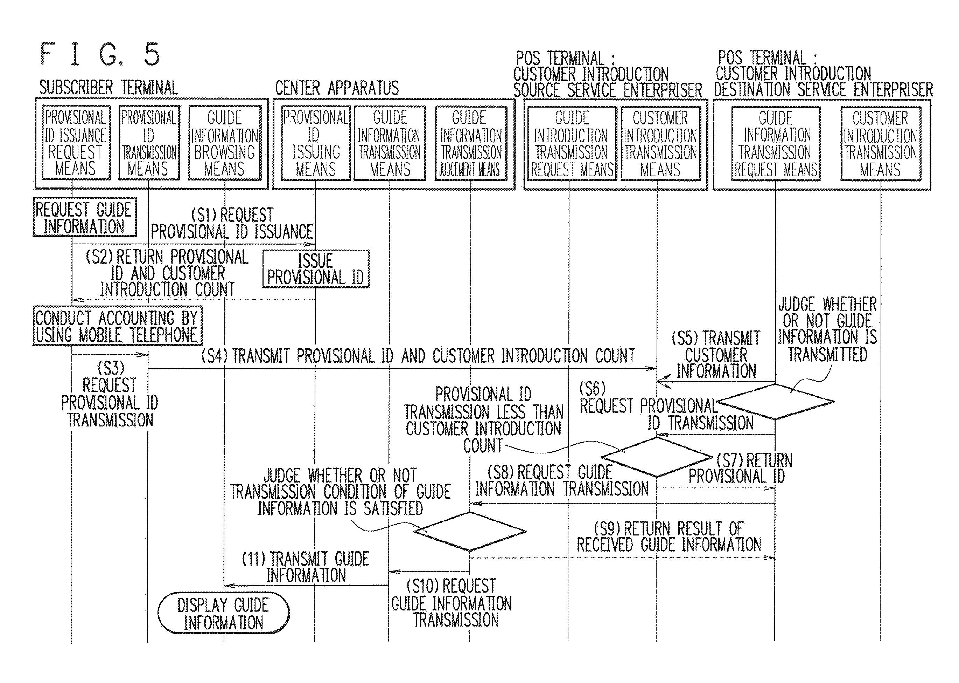

Next, operation of this embodiment will be described by using the functional blocks of FIG. 6, the subscriber information management table of FIG. 7, the service enterprise information management table of FIG. 8, and the sequence of FIG. 5.

(S1) The user desiring to use a subscriber terminal operates the subscriber terminal to request the center unit to issue a provisional ID as preparing operation to receive guide information from a service enterpriser.

The provisional ID issuing means of the center unit having received the provisional ID issuance request accesses the subscriber information managing means to extract a customer introduction count and customer introduction distance corresponding to the subscriber ID from the subscriber information management table. For example, if the subscriber ID is "minami", a value of "2" and a value of "800" are acquired as the customer introduction count and the customer introduction distance.

And the provisional ID issuing means accesses the provisional ID information managing means to add a new record to the provisional ID information management stable. In the table, the "provisional ID" item stores a value to uniquely identify each record of the provisional ID information management table; here, an automatically assigned value of "74" is stored. In the table, the "subscriber ID" item stores "minami". The "remaining guide information transmission count" of the table stores a value of the customer introduction count "2". In the table, the "customer introduction distance" item stores the customer introduction distance "800". The "guide information transmission service enterpriser ID" item is blank in the table.

(S2) The provisional ID issuing means returns the value "74" of the issued provisional ID, the value "2" of the customer introduction count, and the value "800" of the customer introduction distance to the subscriber terminal.

(S3) And, at timing when the subscriber pays the bill in a bar or the like by use of a mobile telephone including a contactless IC card, the subscriber terminal transfers the value "74" of the provisional ID, the value "2" of the customer introduction count, and the value "800" of the customer introduction distance to the provisional ID transmission means.

Also, the processing from (S1) to (S3) described above may be executed as a sequence of operation at timing when the subscriber pays the bill in a bar or the like by use of a mobile telephone including a contactless IC card.

(S4) The provisional ID transmission means delivers the value "74" of the provisional ID, the value "2" of the customer introduction condition (customer introduction count), and the value "800" of the customer introduction distance to the shop (service enterpriser) being currently visited by the customer.

(S5) The customer introduction transmission means of the service enterpriser transmits customer information to one other service enterpriser, e.g., one other shop of the same store chain to introduce the customer. The customer information to be transmitted includes, in addition to the accounting time in the store being currently visited, the number of customers in the group, ages, sexes, or the like, the positional information of the shop (the latitude and the longitude, etc.) and the value "800" of the customer introduction distance in the second exemplary embodiment. Also in this situation, the positional information of the shop is managed by the customer introduction transmission means of each service enterpriser.

The other store (service enterpriser BBB) having received the customer information judges whether or not the received customer information is sent as guide information to the subscriber terminal. Particularly, whether or not the positional information of the own shop is within the range of the customer introduction distance from the position of the shop of the customer introduction source is judged. If the position is not within the range, guide information is not transmitted.

Here, the distance per second of the north latitude is obtained by 40 thousand kilometers (circumferential distance of the earth) / 360° / 60 minutes / 60 seconds, and this is roughly equal to 31 meters. The distance per second of the east longitude is obtained by 31 meters x COS35°, and this is roughly equal to 25 meters (the north latitude is limited to 35° in this situation).

For example, if the position of the customer introduction source shop is at longitude 39°45'3" east and latitude 35° 38'33" north and that of the customer introduction destination shop is at longitude 139°45'18" east and latitude 35°38'24" north, the distance between the shops is obtained by √((north latitude 15° x 31 m) x (north latitude 15° x 31 m) + (east longitude 9° x 25 m) x (east longitude 9° x 25 m)), and this is roughly equal to 517 m.

Therefore, since the distance 517 (m) between the shops is less than the customer introduction distance "800" notified from the customer introduction source, the shop to which the customer is introduced is a candidate for transmission of the guide information. However, even in a situation wherein the distance between the shops satisfied the condition, if it is determined that the customer is not appropriate for this shop based on other customer information (the age, the sex, etc.), the guide information need not necessarily be sent to the subscriber terminal.

(S6) If it is judged that it is favorable to deliver the guide information to the subscriber terminal, the store issues a request for transmission of a provisional ID to the store (service enterpriser BBB) as the transmission source of the customer information.

(S7) When the request for transmission of a provisional ID is received, the store (service enterpriser AAA) returns a provisional ID and the service enterpriser ID "AAA" of the customer introduction source if the transmission count of the provisional ID to the other service enterpriser is less than the customer introduction count received from the subscriber terminal. Since the customer introduction count is a value of "2" in this embodiment, if the provisional ID has already been delivered to two service enterprisers, provisional ID return rejection is replied to the service enterpriser as the provisional ID transmission request source.

(S8) The store (service enterpriser BBB) having received the provisional ID requests the center unit to transmit guide information to the subscriber terminal, by use of the provisional ID and the service enterpriser ID of the customer introduction source.

When receiving the request from the service enterpriser, the center unit can acquire the service enterpriser ID through the authentication processing of the service enterpriser. In the embodiment, when the service enterpriser having issued the transmission request is BBB, the value of service enterpriser ID "BBB" is acquired.

When the transmission request of guide information is received, the guide information transmission judgment means of the center apparatus accesses the provisional ID information managing means.

And it is confirmed that the service enterpriser ID having requested the guide information transmission has not been stored in the "guide information transmission service enterpriser ID" of the provisional ID information management table corresponding to the provisional ID attained in (S8). If the ID has been stored, the provisional ID has already been used once by the service enterpriser as the guide information transmission request source, and hence request rejection is returned.

Next, the "remaining guide information transmission count" is acquired from the provisional ID information management table. If the "remaining guide information transmission count" is "0", request rejection is returned to the service enterpriser as the guide information transmission request source.

In the present embodiment, the service enterpriser information managing means is subsequently accessed to acquire, from the service enterpriser information management, the positions of the stores of the customer information introduction source service enterpriser and the customer information introduction destination service enterpriser to calculate the distance between the stores. If the value of the distance between the stores is more (farther) than the value of "customer introduction distance" in the provisional ID information management table, request rejection is returned to the service enterpriser of the guide information transmission request source.

For example, if the position of the customer introduction source shop is the service enterpriser AAA, the shop position is at longitude 139°45'3" east and latitude 35°38'33" north, and if the customer introduction destination shop position is the service enterpriser BBB, the position is at longitude 139°45'18" east and latitude 35°38'24" north. Hence, the distance between the shops is obtained by √((north latitude 15° x 31 m) x (north latitude 15° x 31 m) + (east longitude 9° x 25 m) x (east longitude 9° x 25 m)), and this is roughly equal to 517 m. Also, since "customer introduction destination" in the provisional ID information management table is 800 m, it is judged that the guide information can be transmitted.

(S9) And one is subtracted from the "remaining guide information transmission count" of the provisional ID information management table, the service enterpriser ID as the guide information transmission request source is added to the "guide information transmission service enterpriser ID" item, and successful acceptance of the request is returned to the service enterpriser as the guide information transmission request source.

(S10) And the guide information transmission judgment means notifies the value of the subscriber ID "minami" to which the guide information is to be transmitted, to the guide information transmission means.

(S11) The guide information transmission means having received the subscriber ID accesses subscriber information managing means to extract the value of the mail address "t-minami@maaa.com" corresponding to the value of the subscriber ID "minami" from subscriber information management table. And, the guide information transmission means delivers guide information to the mail address.

The guide information browsing means of the subscriber terminal having received the guide information displays the guide information.

The first advantage of the present embodiment is that the center apparatus conducts reacheability control from a service enterpriser to a subscriber terminal based on a customer introduction condition managed for each subscriber, i.e., customer introduction distance; hence, customer information can be communicated (customer introduction) directly between service enterprisers (stores) without passing the center apparatus, and the load imposed on the center apparatus is mitigated.

Next, description will be given of a third exemplary embodiment of the present invention. In conjunction with this embodiment, description will be given of a case wherein the subscriber includes an electronic IC card in addition to a subscriber terminal to display guide information. Moreover, description will be given of a method of guaranteeing a transfer of an incentive between service enterprisers by managing the customer introduction route between service enterprisers by the center apparatus.

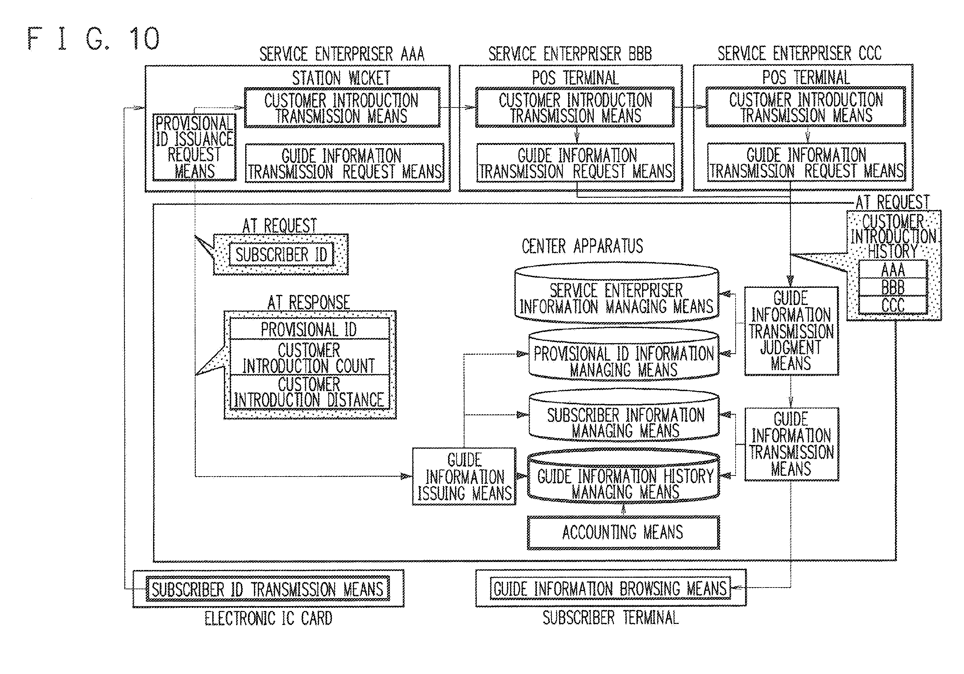

FIG. 10 shows functional blocks of the third exemplary embodiment. The provisional ID issuance request means of FIG. 10 is implemented by a terminal of a service enterpriser in place of the subscriber terminal.

The subscriber includes a subscriber terminal including guide information browsing means and an electronic IC card including subscriber ID transmission means.

In the center unit, guide information history managing means and accounting means are added as new components.

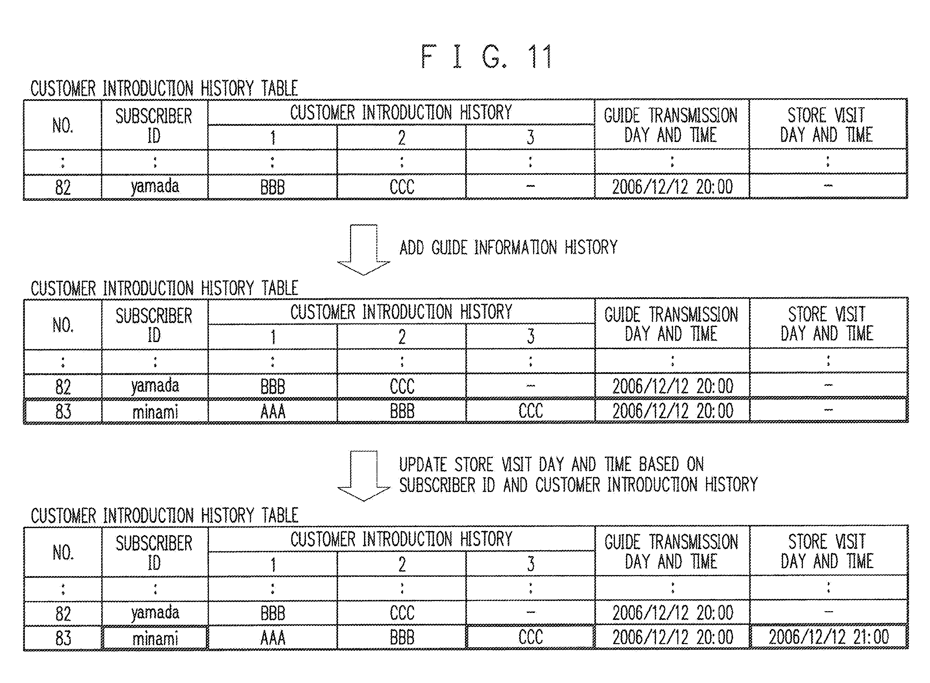

FIG. 11 shows a guide information history table to be managed by the guide information history managing means. The history table includes: a "umber" to uniquely manage history information; a "subscriber ID" indicating a subscriber having sent guide information; a "customer introduction history" indicating service enterprisers through whom customer information has been received a "guide transmission day and time" indicating the day and time when the guide information is transmitted; and a "store visit day and time" indicating the day and time when a customer next visits the store due to the guide information.

Subsequently, operation of the present embodiment will be described. In a situation of a station wicket system employing an electronic IC card, when the subscriber places an electronic IC card over the wicket, the subscriber ID is sent to the service enterpriser.

The wicket device of the service enterpriser requests the center apparatus to issue a provisional ID. In this situation, the wicket device sends a subscriber ID.

The center unit having received the provisional ID issuance request issues a provisional ID to return it to the service enterpriser.

Access from the provisional ID issuing means to the guide information history managing means will be described later.

The provisional ID issuing means having received the provisional ID and a customer introduction condition (e.g., the customer introduction count of the first exemplary embodiment or the customer introduction distance of the second exemplary embodiment) transfers them to the customer introduction transmission means.

Here, the customer introduction transmission means sends the provisional ID and the customer introduction condition to one other service enterpriser to introduce a customer to the other service enterpriser.

When the provisional ID and the customer introduction condition are received, the customer introduction transmission means of the service enterpriser (service enterpriser BBB in this embodiment) judges whether or not this service enterpriser is a valuable subscriber to transmit guide information.

If it is judged that the guide information is to be transmitted, the customer introduction transmission means requests the guide information transmission request means to transmit guide information. Simultaneously, the customer introduction transmission means subtracts one from the customer introduction count. And if the count is zero, the transmission means terminates the processing. And if the count is other than zero, the transmission means sends the provisional ID and the customer introduction condition to further one other service enterpriser (service enterpriser CCC in this embodiment).

Contrarily, if it is not judged that the guide information is to be transmitted, the customer introduction transmission means directly transmits the provisional ID and the customer introduction condition to the other service enterpriser (service enterpriser CCC in this embodiment). In the operation, since service enterpriser BBB has not delivered guide information, the customer introduction count is not reduced.

Further, in the present embodiment, each time the provisional ID and the customer introduction condition are sent to the other service enterpriser, the service enterpriser ID of a service enterpriser through which the information is transmitted is added as an introduction history. And the introduction history is transmitted when a guide information transmission request is issued to the center unit.

For example, in a case wherein service enterpriser AAA sends the provisional ID and the customer introduction condition to service enterpriser BBB and then service enterpriser BBB sends them to service enterpriser CCC, when service enterpriser CCC issues a guide information transmission request to the center unit, the service enterpriser IDs "AAA", "BBB", and "CCC" are fed as an introduction history.

When the guide information transmission request is received from the service enterpriser, the guide information transmission judgment means judges whether or not the transmission condition of guide information is satisfied, as in the first and second exemplary embodiments; if the condition is satisfied, a guide information transmission request is issued to the guide information transmission means.

In the operation, the introduction history received from the service enterpriser is also transferred to the guide information transmission means.

As in the first and second exemplary embodiments, the transmission means acquires the mail address of the subscriber from the subscriber information managing means to deliver guide information to the subscriber terminal and accesses the guide information history means to add the introduction history to the guide information history table.

When the introduction history includes the service enterpriser IDs "AAA", "BBB", and "CCC" in the present embodiment, "AAA", "BBB", and "CCC" are stored in "customer introduction history" items 1, 2, and 3, respectively.

Further, simultaneously, the subscriber ID having sent the guide information and the transmission day and time of the guide information are also stored.

Assume that the subscriber next visits a store of service enterpriser CCC based on the guide information received by the subscriber terminal. And assume that the subscriber makes a purchase in the store of service enterpriser CCC by use of an electronic IC card.

In this situation, the subscriber ID transmission means of the IC card delivers the subscriber ID to the POS terminal of service enterpriser CCC.

When the subscriber ID is received, the provisional ID issuance request means of the POS terminal requests the center apparatus to issue a provisional ID.

After the provisional ID issuance request is received, the provisional ID issuing means of the center apparatus accesses the guide information history managing means to judge whether or not a customer has visited the store based on the guide information.

According to the judging method, the presence of the visit is determined if the guide information history table includes a subscriber ID matching the subscriber ID sent from the POTS terminal and the service enterpriser ID last introduced in the "customer introduction history" item matches the service enterpriser ID of the provisional ID issuance request source. In this embodiment, the matching is assumed due to the service enterpriser ID "CCC". And if it is judged that the customer has visited the store based on the guide information, the present day and time are added to the "store visit time" item of the guide information history table.

As a result, the communication provider or ISP can guarantee that the customer introduced between the service enterprisers has visited the store based on the guide information. The accounting means refers to the guide information history table of the subscriber information managing means to transfer an incentive between the service enterprisers.

In an example of the incentive calculation method, it can be considered that an amount of 1.5% of the sales amount is given to the service enterpriser as the customer introduction source and an amount which is obtained by dividing 1.5% of the sales amount by the number of intermediaries is given to the service enterpriser as the customer introduction source. In this case, when the subscriber purchases an item of ten thousand yen in the store of service enterpriser CCC, 1.5% of the sales amount, i.e., 150 yen is transferred to the service enterpriser; since only one intermediary exists in this example, 150 yen is also transferred to service enterpriser BBB as the intermediary.

Further, the incentive may be transferred only when the guide information is delivered to the subscriber due to the customer introduction between the service enterprisers. For example, if the store visit day and time field is empty in the guide information history table, the operation may be carried out by transferring one yen from the service enterpriser as the introduction destination to the service enterpriser as the introduction source based on the customer introduction history.

The amount of the purchase made by the subscriber in the store of service enterpriser CCC may be notified by the provisional ID issuance request means, or via a credit company.

In this connection, (1) A time zone during which guide information may be transmitted to the subscriber terminal (e.g., between 10:00 and 17:00) may be added to the customer introduction condition.

(2) The validity expiration time of the provisional ID (valid until 2006/12/28 15:00, etc.) may be added to the customer introduction condition.

(3) It is assumed in the first to third exemplary embodiments that the service enterprisers are real stores such as a bar and a station wicket; however, the service enterprise may also be a mail-order sales site on the Internet or the like. In such case, the subscriber terminals of the first to third exemplary embodiments are implemented by a personal computer and an STB (Set-Top Box).

(4) Respective means of functional blocks of the first to third exemplary embodiments may be implemented, by use of outsourcing, in locations other than those of the respective terminals of the embodiments.

(5) In the embodiments, the e-mail is employed as a method to realize the reacheability to the subscriber terminal; however, a call issuance by a telephone number, a short message by a telephone number, and an IM (Instant Massage) may also be available.

(6) The customer introduction condition managed by the subscriber information managing means of the center unit may also be set from subscriber terminals such as a mobile telephone, a personal computer, and an STB (St-Top Box).

(7) It is also possible that the provisional ID issuing means of the center unit issues provisional IDs such that only one valid provisional ID exists for one subscriber ID in any situation. The method can be achieved by setting the "remaining guide information transmission count" to zero for all provisional IDs to be issued to the same subscriber ID at provisional ID issuance timing.

(8) The moving time (time required) to move from one store to another store may be adopted as the customer introduction condition.

Incidentally, the above embodiments are favorable embodiments of the present invention and can be modified in various ways within the scope the gist of the present invention. For example, it is also possible that programs to realize functions of the subscriber terminal, the center unit, the POS terminal, and the like are made to be read by respective devices so as to execute processing to implement the functions of the respective devices by executing the programs. Further, it is also possible that the programs may be transmitted to other computer systems via computer-readable recording media such as a CD-ROM and a magneto-optical disk or by use of a transmission wave via transmission media such as the internet and a telephone communication line.

This application is based upon and claims the benefit of priority from Japanese patent application No. 2007-042880, filed on February 22, 2007, the disclosure of which is incorporated herein in its entirety by reference.

### INDUSTRIAL APPLICABILITY

The present invention is applicable to a customer introduction support system in which guide information can be acquired by a subscriber terminal from many service enterprisers at appropriate timing while preventing leakage of private information such as a mail address capable of identifying an individual.

### BRIEF DESCRIPTION OF DRAWINGS

[FIG. 1] is a system configuration diagram showing a system configuration of a first exemplary embodiment of the present invention.
[FIG. 2] shows functional blocks of the first exemplary embodiment of the present invention.
[FIG. 3] is a diagram showing a subscriber information management table of the first exemplary embodiment of the present invention.
[FIG. 4] is a diagram showing a provisional ID information management table of the first exemplary embodiment of the present invention.
[FIG. 5] is a sequence chart showing processing operation of the first exemplary embodiment of the present invention.
[FIG. 6] shows functional blocks of a second exemplary embodiment of the present invention.
[FIG. 7] is a diagram showing a subscriber information management table of the second exemplary embodiment of the present invention.
[FIG. 8] is a diagram showing a service enterpriser information management table of the second exemplary embodiment of the present invention.
[FIG. 9] is a diagram showing a provisional ID information management table of the second exemplary embodiment of the present invention.
[FIG. 10] shows functional blocks of a third exemplary embodiment of the present invention.
[FIG. 11] is a diagram showing a guide information history table of the third exemplary embodiment of the present invention.

## Claims

1. A customer introduction support system for mutually introducing customers by transferring provisional IDs issued from a center apparatus between service enterprisers, **characterized in that:**
the center apparatus comprises
provisional ID issuing means for issuing a provisional ID related to a subscriber address whose reacheability to a subscriber terminal is guaranteed and a customer introduction count and
guide information transmission judgment means for judging, at reception of a request for message transmission to a subscriber terminal by a provisional ID from a service enterpriser, that the guide information message is transmitted to the subscriber terminal if the number of service enterprisers having transmitted a guide information message to a subscriber terminal is less than the customer introduction count and the guide information message is not transmitted if the number is equal to or more than the customer introduction count, and
a terminal of the service enterpriser comprises
guide information transmission request means for requesting transmission of a guide information message to a subscriber terminal by designating a provisional ID and
customer introduction transmission means for introducing a customer by transferring a provisional ID issued from the center apparatus to other service enterpriser within the customer introduction count.

2. A customer introduction support system for mutually introducing customers by transferring provisional IDs issued from a center apparatus between service enterprisers, **characterized in that:**
the center apparatus comprises
provisional ID issuing means for issuing a provisional ID related to a subscriber address whose reacheability to a subscriber terminal is guaranteed and customer introduction distance prescribing distance in which customers can be mutually introduced between service enterprisers and
guide information transmission judgment means for judging, at reception of a request for message transmission of guide information to a subscriber terminal by a provisional ID from a service enterpriser, that the guide information message is transmitted to the subscriber terminal if distance between the stores of the service enterprisers is less than the customer introduction distance and the guide information message is not transmitted if the distance is equal to or more than the customer introduction distance, and
a terminal of the service enterpriser comprises
guide information transmission request means for requesting transmission of a guide information message to a subscriber terminal by designating a provisional ID and
customer introduction transmission means for introducing a customer by transferring a provisional ID issued from the center apparatus to a shop of other service enterpriser within the customer introduction distance.

3. A customer introduction support system for mutually introducing customers by transferring provisional IDs issued from a center apparatus between service enterprisers, **characterized in that:**
the center apparatus comprises
provisional ID issuing means for issuing a provisional ID related to a subscriber address whose reacheability to a subscriber terminal is guaranteed, a customer introduction count, and customer introduction distance prescribing distance in which customers can be mutually introduced between service enterprisers and
guide information transmission judgment means for judging, at reception of a request for message transmission of guide information to a subscriber terminal by a provisional ID from a service enterpriser, that the guide information message is transmitted to the subscriber terminal if the number of service enterprisers having transmitted a guide information message to a subscriber terminal is less than the customer introduction count and distance between the stores of the service enterprisers is less than the customer introduction distance and the guide information message is not transmitted in the other cases, and
a terminal of the service enterpriser comprises
guide information transmission request means for requesting transmission of a guide information message to a subscriber terminal by designating a provisional ID and
customer introduction transmission means for introducing a customer by transferring a provisional ID issued from the center apparatus to a shop of other service enterpriser within the customer introduction count and within the customer introduction distance.

4. The customer introduction support system in accordance with one of claims 1 to 3, **characterized in that** the message transmission to the subscriber terminal is realized bey e-mail by use of a mail address as the subscribe address.

5. The customer introduction support system in accordance with one of claims 1 to 4, **characterized in that**
the center apparatus comprises
guide information history managing means for managing the customer introduction history received from the guide information transmission request means of the terminal of the service enterpriser, and day and time when a subscriber having transmitted the guide information message visits the store of the service enterpriser of the message transmission source and
accounting means for transferring incentives between the service enterprisers based on the information managed by the guide information history managing means, and
the terminal of the service enterpriser comprises
customer introduction transmission means implemented by adding an identifier of the service enterpriser as the customer introduction source to the customer introduction transmission means and
guide information transmission request means for transmitting an identifier of at least one service enterpriser having mutually introduced a customer to the guide information transmission request means, as a customer introduction history to the center apparatus.

6. A customer introduction support method of mutually introducing customers by transferring provisional IDs issued from a center apparatus between service enterprisers, **characterized in that:**
the center apparatus comprises
a provisional ID issuing step of issuing a provisional ID related to a subscriber address whose reacheability to a subscriber terminal is guaranteed and a customer introduction count and
a guide information transmission judgment step of judging, at reception of a request for message transmission to a subscriber terminal by a provisional ID from a service enterpriser, that the guide information message is transmitted to the subscriber terminal if the number of service enterprisers having transmitted a guide information message to a subscriber terminal is less than the customer introduction count and the guide information message is not transmitted if the number is equal to or more than the customer introduction count, and
a terminal of the service enterpriser comprises
a guide information transmission request step of requesting transmission of a guide information message to a subscriber terminal by designating a provisional ID and
a customer introduction transmission step of introducing a customer by transferring a provisional ID issued from the center apparatus to other service enterpriser within the customer introduction count.

7. A customer introduction support method of mutually introducing customers by transferring provisional IDs issued from a center apparatus between service enterprisers, **characterized in that** the center apparatus comprises
a provisional ID issuing step of issuing a provisional ID related to a subscriber address whose reacheability to a subscriber terminal is guaranteed and customer introduction distance prescribing distance in which customers can be mutually introduced between service enterprisers and
a guide information transmission judgment step of judging, at reception of a request for message transmission of guide information to a subscriber terminal by a provisional ID from a service enterpriser, that the guide information message is transmitted to the subscriber terminal if distance between the stores of the service enterprisers is less than the customer introduction distance and the guide information message is not transmitted if the distance is equal to or more than the customer introduction distance, and
a terminal of the service enterpriser comprises
a guide information transmission request step of requesting transmission of a guide information message to a subscriber terminal by designating a provisional ID and
a customer introduction transmission step of introducing a customer by transferring a provisional ID issued from the center apparatus to a shop of other service enterpriser within the customer introduction distance.

8. A customer introduction support method of mutually introducing customers by transferring provisional IDs issued from a center apparatus between service enterprisers, **characterized in that:**
the center apparatus comprises
a provisional ID issuing step of issuing a provisional ID related to a subscriber address whose reacheability to a subscriber terminal is guaranteed, a customer introduction count, and customer introduction distance prescribing distance in which customers can be mutually introduced between service enterprisers and
a guide information transmission judgment step of judging, at reception of a request for message transmission of guide information to a subscriber terminal by a provisional ID from a service enterpriser, that the guide information message is transmitted to the subscriber terminal if the number of service enterprisers having transmitted a guide information message to a subscriber terminal is less than the customer introduction count and distance between the stores of the service enterprisers is less than the customer introduction distance and the guide information message is not transmitted in the other cases, and
a terminal of the service enterpriser comprises
a guide information transmission request step of requesting transmission of a guide information message to a subscriber terminal by designating a provisional ID and
a customer introduction transmission step of introducing a customer by transferring a provisional ID issued from the center apparatus to a shop of other service enterpriser within the customer introduction count and within the customer introduction distance.

9. The customer introduction support method in accordance with one of claims 6 to 8, **characterized in that** the message transmission to the subscriber terminal is realized by e-mail by use of a mail address as the subscribe address.

10. The customer introduction support method in accordance with one of claims 6 to 9, **characterized in that**
the center apparatus comprises
a guide information history managing step of managing the customer introduction history received from the guide information transmission request means of the terminal of the service enterpriser and day and time when a subscriber having transmitted the guide information message visits the store of the service enterprisers of the message transmission source and
an accounting step of transferring incentives between the service enterprisers based on the information managed by the guide information history managing means, and
the terminal of the service enterpriser comprises
a customer introduction transmission step implemented by adding an identifier of the service enterpriser as the customer introduction source to the customer introduction transmission step and
a guide information transmission request step of transmitting an identifier of at least one service enterpriser having mutually introduced a customer to the guide information transmission request means, as a customer introduction history to the center apparatus.
